# EUROPEAN PATENT SPECIFICATION

(11) **EP 1 950 030 B1**
(45) Date of publication and mention of the grant of the patent: **17.08.2011**
(21) Application number: 07001641.5
(22) Date of filing: 25.01.2007
(51) Int. Cl.: B29C 55/20, D06C 3/04

(54) **A clip system for stretching device, stretching method and transport device making use thereof**
Kluppen-System für eine Reck-Vorrichtung, Reck-Verfahren und Transport-Vorrichtung, die davon Gebrauch macht
Système de pince pour un dispositif d'étirage, méthode d'étirage et dispositif de transport utilisant ledit système

(43) Date of publication of application: 30.07.2008
(73) Proprietor: Andritz AG, 8045 Graz (AT)
(72) Inventor: Rühlemann, Ulrich, 83355 Grabenstätt (DE); Trivero, Gilbert, 73800 La Chavanne (FR)
(74) Representative: Koepe, Gerd L.

(56) References cited:
- FR-A- 1 330 610
- GB-A- 239 413
- GB-A- 991 245
- GB-A- 2 007 281
- US-A- 3 179 976

## Description

The present invention relates to a clip system for stretching devices. The invention also relates to a method of stretching films into one (monoaxial stretching) or two directions (biaxial stretching) and also relates to a transport device, the method and the device making use of the new clip system of the invention.

The overall process of fabricating monoaxially or biaxially oriented films, particularly of films comprising polymer materials, comprises steps of stretching the film previously generated by well-known methods in the longitudinal (machine) direction and/or in the transverse direction, the latter being a stretching step in a direction perpendicular to the machine direction, commonly. These stretching steps may be performed alone or may be performed one after the other or may be performed simultaneously. In the latter case, a stretching action in the longitudinal (machine) direction and transverse direction needs the simultaneous application of stretching forces to the film material in two directions (usually perpendicular to each other), while the film is moving with high speed along a moving path of the film on a stretching device.

There are known from the prior art stretching devices or systems where the film is grasped at the opposite outer edges of the film web by a multiplicity of clip elements. Said elements are arranged along, and are guided on, two rail systems extending on both sides of the film web along the moving path of the film web. After reaching the end of the moving path of the film, the clip elements are returned from the end of the moving path to its beginning on both sides of the continuously moving film web, thus forming two continuous guiding rails for the clips on each side of the moving path of the film web.

While cylinder rollers, taking up the film after the casting machine effect a drawing action on the film material, thereby stretching the film in the longitudinal (machine) direction, the clip elements grasp the film web on opposite sides of the longitudinal edge while being guided on the two opposite rail systems and changing, e. g. increasing and/or decreasing, their transverse distance to each other when moving towards the take-up roller. Thereby, a step of transverse stretching of the film web simultaneously with its movement into the machine direction is effected. Hence, the transverse stretching step may occur with or without stretching the film web in a longitudinal direction; in the latter case, a longitudinal stretching may be effected before or after the transverse stretching step, or may be omitted at all.

Clip elements, usually on respective carriages, may move along the rails on (vertically and/or horizontally arranged) running rollers or on sliding surfaces, while being drawn by chains or similar endless moving elements along their way substantially parallel to the path of the film web on the two rails. Clip elements running on rollers are, for example, known from the document FR-B 2,686,041 (Darlet Marchante Technologie S.A.) or from WO 96/33,858 (Rühlemann et al.). While roller-supported clips allow a travel of the clip on its rail with a reduced resistance (a rolling resistance is considered to be lower than a sliding resistance, usually), allowing, in the meantime, travelling speeds of the clips exceeding 300 meters per minute (m/min) and even 500 m/min, clips travelling on sliding surfaces became more common recently. One reason for such a development is the fact that the sliding clips are more cost efficient, since they allow reducing the number of parts considerably (e. g. nine wear-subjected running rollers per clip amounting up to 20,000 or 25.000 rollers per device under operating conditions). On the other hand, sliding clips need a substantial amount of lubrication due to the higher friction of the sliding surfaces of the clip, on the one side, and of the rail, on the other side.

The sliding surfaces of the clip contacting the rails, particularly the upper and lower sliding shoes of the clip, may be provided with friction-reducing sliding elements fixed to the metal surface of the clip. Such sliding elements are made of special plastics materials highly resistant to wear at elevated temperatures, particularly when sliding at good outer lubrication. However, even with perfect lubrication, transverse direction orienting (TDO) stretching devices, especially those having a big width and being operated at high speed, create a lot of friction energy. Such friction energy is expressed as heat at the sliding surfaces provided with the plastics elements, which deteriorates the plastics material of the sliding elements in the course of the time; even those special plastics materials of the sliding shoes having a high, but nevertheless restricted temperature resistance.

Many stretching systems and stretching devices on the market where sliding clip elements are used are limited by the temperature resistance of the plastics elements applied to the sliding contact surfaces of the clips. Hence, it was one object of the present invention to improve the sliding clip performance by suitably dissipating the heat created by the friction between the sliding surfaces of the clip and the contact surfaces of the rail and, thus reducing the accumulated temperature of the sliding element.

When the sliding element temperature is raised, the heat is transferred to the metal of the clip where it dissipates to the clip system. As a result, the temperature of the clip system is raised. A temperature increase of the clip system is considered to be detrimental, always, due to the fact that there may be an increasing risk of the heat to reach the clip table surface where the film web is grasped by the clip gripper. Increasing temperatures at the fixing point (clip table) may cause the film web to tear, thus causing an interruption of the high speed stretching process on the device for feeding the film web appropriately. Hence, it was another object of the present invention to prevent heat created by friction between the sliding surfaces of the clip and the contact surfaces of the rail from arriving at undesired areas of the clip, particularly at the fixing point of the film web to the clip, more particularly at the clip table and its surface.

< The document FR-A 1,330,610 discloses a clip system for holding and stretching a material web moving in a longitudinal direction in a device for stretching the web at least in a direction transverse to the running (machine) direction, said clip system comprising a sliding body adapted to slide on a guide rail system, a drive element fixed to the sliding body and adapted to drive the sliding body along said guide rail system, a web fixation body fixed to the sliding body, comprising a gripper and a clip table and adapted to grasp and fix a material web in the course of the stretching process, and a heat dissipation body made of a heat conducting material and adapted to dissipate heat via its surface to the environment. >

It was now surprisingly found that a special design of the clip can provide a controlled removal of the heat generated by friction between the sliding surfaces of the clip and the contact surfaces of the rail and can prevent a transfer of heat from these surfaces to the clip. Such a design can solve the problems occurring with the prior art clips and thereby can not only reduce or even avoid the wear problems at surfaces subjected to friction but also can reliably prevent the heat from accessing the area of the clip where the film web is grasped by the clip table and the clip gripper.

Hence, the present invention relates to a clip system for grasping a material web movable in a longitudinal direction in a device for at least transverse stretching the material web, said clip system comprising
- a sliding body adapted to slide on a guide rail system of a stretching device, said sliding body comprising a metal element and at least one sliding element applied to the metal element;
- a driving element adapted to push or pull the sliding body along said guide rail system, said driving element being in fixed operating communication with the sliding body;
- a web fixation body adapted to grasp and fix a material web, said web fixation body comprising at least one gripper operation element and a clip table and being in fixed operating communication to the sliding body; and
- a heat dissipation body made of at least one heat-conducting material and being adjacent to, and in heat-conducting communication with, the sliding body adapted to dissipate heat via its surface to the environment, wherein sliding body and the heat dissipation body are fixed to each other in a way allowing or promoting a heat flow between them.

Preferred embodiments of the invention are claimed in dependent claims 2 to 6.

The invention also relates to a transport device according to claim 7 for a film web movable along a transport path in a longitudinal direction of a film web stretching device, said transport device comprising:
- two guide rail systems extending substantially longitudinally of the stretching device and substantially parallel to the movable film web on both sides thereof, allowing a continuous high speed movement of a number of clip bodies from the start of the transport path of the film web to its end and their return from the end of the transport path to the start;
- transportation means forming two continuous conveyor means movable substantially parallel to the film web on both sides thereof and interposing a number of clip systems inbetween, said transportation means being driven by suitable driving means;
- at least one pair of clip systems according to the detailed description found below;
- the two clip systems of one pair being arranged substantially opposite to each other at the two sides of the film web; and
- means for feeding a film web to and removing the stretched film web from the stretching device.

Preferred embodiments of the transport device are claimed in the dependent claims 8 and 9.

Finally, the invention also relates to a method according to claim 10 for stretching a film web at least in the transverse direction, said method comprising the steps of
- feeding a prepared film web into a stretching device allowing the movement of a film web along a longitudinal path in said device while being stretched;
- allowing at least one pair of clip systems according to the detailed description found below, and being adapted to run along said longitudinal path on two guide rail systems extending substantially longitudinally of the stretching device and substantially parallel to the moving film web on both sides thereof, to grasp said film web at two opposite sides thereof and to move said film along its path while exerting a stretching action on it; and
- removing the stretched film web from the stretching device.

Preferred embodiments of the stretching method are claimed in the dependent claims 11 to 13.

The invention, and particularly its preferred embodiments, are now in detail described by referring to the Figures. However while referring to preferred embodiments of the invention in the subsequent description, it has to be stated that the preferred embodiments is referred to only for illustrative purposes; the invention is not at all limited to those preferred embodiments.

In the Figures,
Figure 1 shows a clip system of the invention in a perspective front view ;
Figure 2 shows a side view of a clip system; and

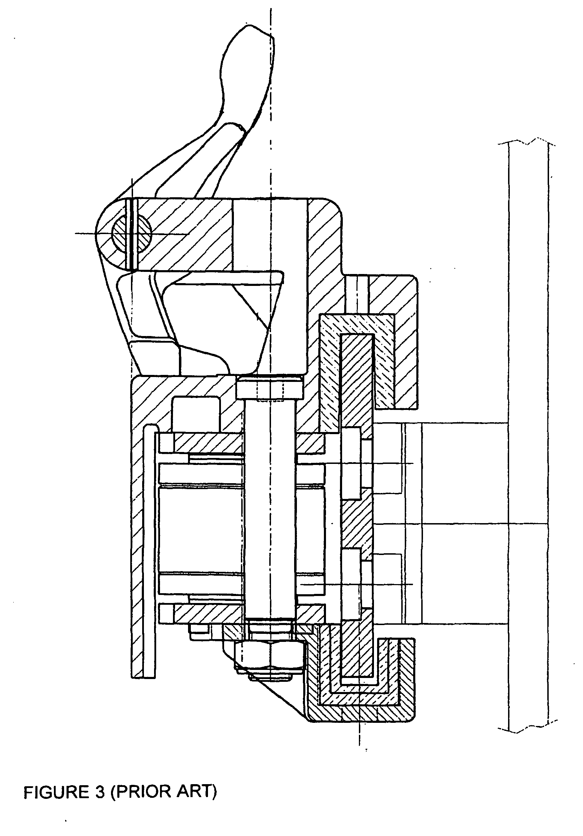

Figure 3 shows a sectional side view of a clip system of the prior art.

The invention is now described in detail by referring to the Figures.

The term "material web", as used in the present specification and claims, is defined to broadly relate to a flat piece of a material which has a sufficient size to be processed in a stretching device. Particularly, the length of said flat piece (e. g. sheet, film, etc.) of material is long enough to be fed into the stretching device, processed therein and taken up after processing by suitable means, e. g. take-up rollers, and the width of said flat piece of material is large enough to be grasped by clip systems described herein. Exemplary, but not restricting examples of such a material web are webs made of polymer films and having the length and width needed for processing in a stretching device. In the present invention, polymer films are the preferred material webs and may have a width of between 0.1 and 5 meters (m), preferably between 0.5 and 2 m.

The term "film web", as used in the present specification and claims, is used in a similar manner as the term "material web" defined above. As will be acknowledged by a person skilled in the art, the film web will define webs having a relatively low thickness. This may be exemplified by polymer films, which are prepared, in process steps known per se and conducted before the present (stretching) processing, by processes exemplified by (but not restricted to) extrusion, blowing, casting, rolling or calendering or similar film forming techniques in a thickness of between 1 µm and 10,000 µm, preferably in a thickness of between 100 µm and 2,500 µm. Such films, due to their low thickness, already have a certain transparency to visible light and a number of further desired properties, as, for example, strength, porosity, permeability or impermeability (e. g. for gases) etc., which might be changed by the stretching step of the invention. Such films are usually made of polymer materials. Examples of such polymer materials are selected from polypropylene (PP), polyethylene (PE), polyvinyl chloride (PVC), polystyrene (PS), polyamide (PA), polycarbonate (PC), polylactic acid (PLA), polyethylene naphthalate (PEN) and polyethylene terephthalate (PETP) and their copolymers and blends, but the invention is, of course, not restricted to the above mentioned materials. Particularly preferred polymer materials to be processed in accordance with the present invention are polypropylene (PP), polyethylene (PE), polyvinyl chloride (PVC), polystyrene (PS), polyamide (PA) and polyethylene terephthalate (PETP).

The term "metal", as used in the present specification and claims, broadly defines and includes all metals which may be used as materials of parts of the stretching device exemplifying the present invention, including the metallic materials used for the clip system of the invention and its parts and for the transport device of the invention and its parts. It will be appreciated by a skilled person (and is included in the present meaning of the term "metal") that the term "metal" includes metal alloys and metal compositions of different metals or of identical metals but metals having different (e. g. crystalline) structures due to their treatment. Preferred metals are all metals of the Group Vlllb of the Periodic System (more specifically Fe, Co, Ni) and of the Groups Ib, IIa and b, IIIa, IVb, Vb, VIb and VIIb of the Periodic System (more specifically Cu, Mg, Zn, Al, Ti, V, Cr, Mo, W, Mn) and alloys of said preferred metals, which, of course, may also include other metals and even non-metals.

The term "stretching", as used in the present specification and claims, is defined to mean any process by which materials, preferably polymers, even more preferred the polymers mentioned above, are subjected a drawing step in one direction (monoaxial stretching) or two directions (biaxial stretching) under controlled (especially temperature and drawing ratio) conditions. Thereby, the dimensions of the materials are enlarged at a ratio of up to 1 : 10. Due to the fact that the polymer molecules are arranged more or less in parallel by such stretching, the process is also referred to as "orientation". Thereby, the strength of the polymer material may be increased substantially, and other properties may also be influenced.

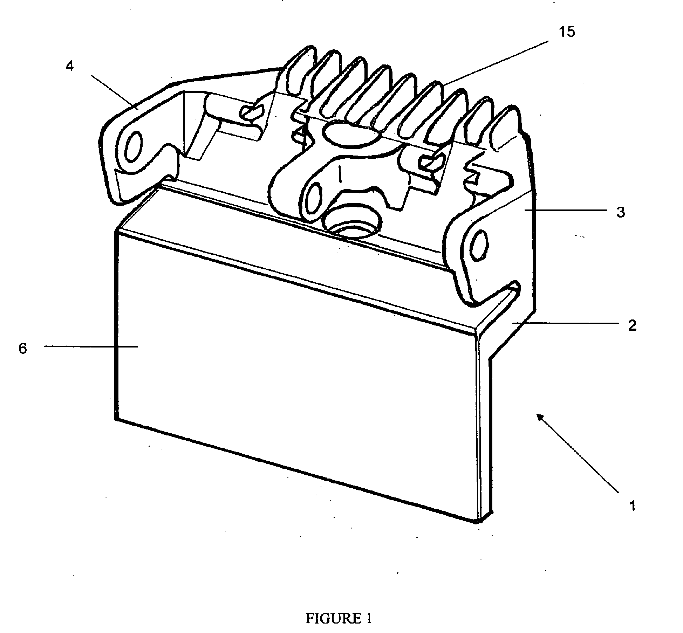

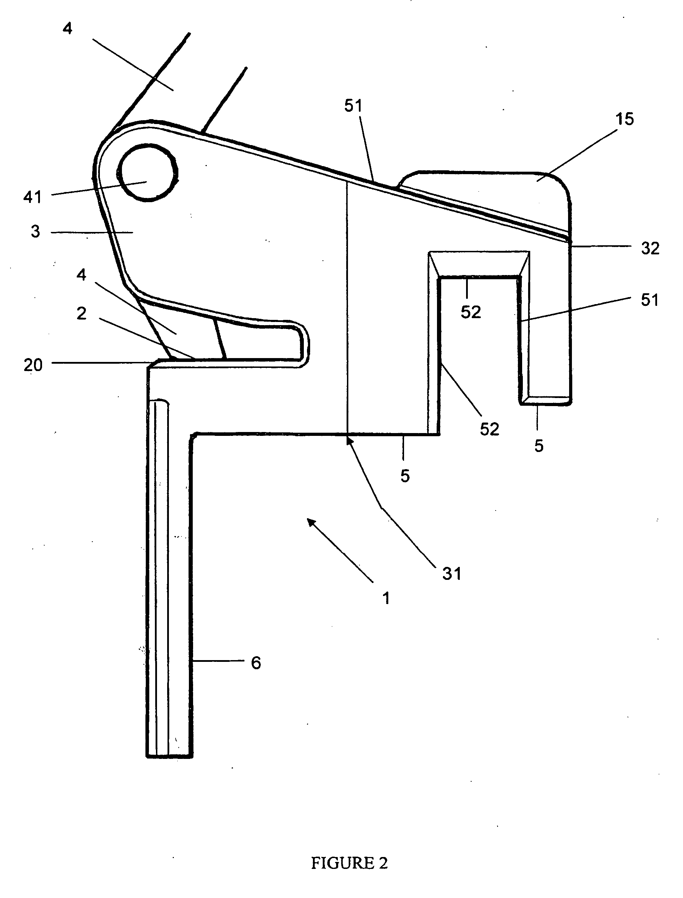

Reference is now made to Figure 1 and Figure 2 showing a clip system 1 of the invention in a perspective front view (figure 1) and in a side view (Figure 2). The clip system 1 for grasping a material web 20, which is movable in a longitudinal direction in a device for stretching the material web, may comprise a sliding body 5, a web fixation body 3 and a heat dissipation body 15.

As already mentioned above, the device for stretching may be a device effecting monoaxial stretching only (e. g. stretching of the material web in a direction transverse to the moving direction of the web or in a direction of the movement of the material web) or may be a device effecting biaxial stretching, independent from the order of the stretching steps (first longitudinal, then transverse; first transverse, then longitudinal; simultaneously longitudinal and transverse).

According to the invention, the sliding body 5 being a part of the clip system 1 is adapted to slide on a guide rail system of a stretching device (which will be described in detail below). In other words: The shape, location and material of the sliding body 5 in the clip system 1 are made such the sliding body will allow a sliding of the clip system 1 in a suitable manner on a usual guide rail system of a stretching device. As can be particularly seen from Figure 2, the shape of the sliding body 5 is similar to the letter "U" allowing an engagement of the "free space" of the sliding body 5 and, hence, of the clip system 1, with a guide rail where the guide rail is guiding the clip system 1 while being inserted into the free space, preferably the rectangular opening of the "U"-shaped portion. In accordance with the invention, the sliding body 5 is made of a metal, and in preferred embodiments, the metal element 51 of the sliding body 5 is made of a metal selected from the group consisting of iron and steel, nickel, copper, brass, bronze, aluminium and alloys containing one or more than one of these metals. Advantageously, said metals/alloys provide for a high strength sliding body, the material of which is not subject to wear but, in addition, provides good heat conducting properties. Particularly preferred metals/alloys are steel and copper alloys like brass and bronze.

Instead of the above-described system of a sliding body 5 adapted to run on a guide rail, the guiding system can also be "inverted" in such a way that, for example, the guide rail forms a kind of tunnel wherein a massive sliding body 5 is moving, which sliding body may be made of a metal selected from the group of metals mentioned above. The outer metal surfaces of the massive sliding body 5 are in sliding contact with the inner surfaces of the guide rail tunnel.

At least one of the "inner surfaces" of the sliding body metal element 51 (or at least one of the "outer" surfaces of the massive metal sliding body of the "inverted" system) has applied thereon a sliding element 52. The main purpose of the sliding element 52 is to reduce the friction between the sliding body 51 (and, hence, the clip system 1) and the contacting surfaces of the guide rail, even at perfect lubrication of said surfaces. In a preferred embodiment of the invention, all inner (in case of the "inverted" system: outer) surfaces, for example all three (3) inner (in case of the "inverted" system: outer) surfaces, of the sliding body 51 are each provided with a sliding element 52 in order to reduce the friction as much as possible. This may be particularly effective in cases where large forces of the stretching step are exerted on the clip system 1 and, hence, particularly to the metal element 51 of the sliding body 5.

The material of the sliding element 52 can be selected by a skilled person from those materials suitable for the intended purpose. In a preferred embodiment of the invention, the sliding element 52 is made of a plastics material. A skilled person may select such a plastics material from a number of suitable materials, of which high temperature resistant, and, even more preferred, high temperature, high shear resistant materials, predominantly polymers, are particularly preferred. Especially suitable materials are selected from polymers selected from the group consisting of polyimide (PI), polyamide-imide (PAI), PEEK, PEK, PTFE, epoxy resins, phenolic resins, graphite, carbon-reinforced carbon (CFC), all these materials with or without reinforcement or additives. Furthermore the sliding element 52 may be also made of a non polymeric material like a sliding metal known e.g. from sliding contact bearings, or of a ceramic for sliding purposes. In a preferred embodiment of the invention the sliding element 52 is made of a polymer like polyimide (PI), polyamide-imide (PAI), PEEK, PEK, PTFE, epoxy resins, phenolic resins or combinations thereof.

The clip system 1 further comprises a driving element adapted to push or pull the sliding body 5 along said guide rail system, said driving element being in fixed operating communication with the sliding body 5. Such a driving element may be any driving element a skilled person may imagine, as long as it is suitable to effect a driven movement of the sliding body 5 (and, hence, of a clip system 1) along the guide rail. A non-restricting example of a driving element is a chain, a rope or a belt.

The web fixation body 3 which is also a part of the clip system 1 of the invention and, hence, is in fixed operation communication to the sliding body 5, is adapted to grasp and fix a material web 20 in the process of stretching said material web. In particular, the web fixation body 3 comprises at least one gripper operation element 4 and a clip table 2. The gripper operation element 4 may be any element (usually pivotable from an open position (where no material web is fixed due to the gap between the element 4 and the clip table 2) to a closed, or fixing, position (where a piece of a material web is fixed by means of the gripper operation element 4 touching the material web on the clip table 2). The movement occurs around an axis which is shown at 41 in Figure 2. The pivoting movement may be controlled and actuated mechanically, magnetically, electronically and/or on any route a skilled person may know for the same purpose and will effect a fixation or release of the material web at the clip table 2 so that a drawing effect may be exerted on the material web when the clip system 1 moves along the guide rail.

The above term "is in fixed operation communication" used for the web fixation body 3 in relation to the sliding body 5 means that both bodies are connected, and may be connected, in particular embodiments of the invention, even in the form of a rigid connection and, when in operation, act as one part without that any relative change of a position is made by one of the bodies without that the other moves by the same distance and in the same direction.

The clip system 1 according to the invention further comprises the heat dissipation body 15 which is adapted to dissipate heat via its surface to the environment. Said heat dissipation body 15 is made from at least one, preferably from only one, heat conducting material and is located adjacent to, and in heat-conducting communication with, the sliding body 5, preferably one of its surfaces, more preferably its upper surface (in operation position of the clip system 1).

In accordance with the invention, the sliding body 5 and the heat dissipation body 15 are integrally fixed to each other in a way allowing or promoting a heat flow between them. The term "allowing or promoting a heat flow", as used in the present specification and claims, is understood to mean that the heat generated at the sliding body due to the friction (as described in detail above) may flow from the sliding body 5 to the heat dissipation body 15 easily or is even forced to flow between the two bodies due to structure and/or material properties. Thereby, the heat at the sliding body 5 may be prevented from accumulating at the point of its generation and will be forced to flow away for being dissipated to the environment.

In a particularly preferred embodiment, the sliding body 5 and the heat dissipation body 15 are both made of metals having a high heat conductivity. Examples of such material combinations are iron and steel, copper, brass, bronze, aluminum, by which an easy flow of the heat away from the point of its generation to a point of easy dissipation can be effected.

According to the invention, even more preferred is an embodiment of the clip system 1, wherein the heat dissipation body 15 comprises a large contact surface to the surrounding environment. By such a large contact surface of the heat dissipation body 15 to the surrounding environment, e. g. the surrounding air, a large heat transfer capacity from the heat dissipation body 15 to the environment can be guaranteed, which, in turn, increases the heat flow from the sliding body 1 to the heat dissipation body 15 as desired.

As a practical example showing the preference of this embodiment over others, the heat dissipation body 15 comprises a contact surface increased by a factor of at least 2 in comparison to the contact area between the sliding body 5 and the heat dissipation body 15. In other words: If the usual contact area between the sliding body 5 and the heat dissipation body 15 of a clip system 1 is given by 20 cm², the area of heat exchange between the heat dissipation body 15 and the environment is increased to at least 2 x 20cm², i. e. at least 40 cm², whereby the heat exchange capacity can at least be doubled. Thereby, a considerable improvement of the heat dissipation can be achieved.

In practically particularly preferred embodiments of the invention, the heat dissipation body 15 comprises cooling ribs 151 which may have different shapes and which are extending, under operation conditions, towards the upper end of the clip system 1. By using such ribs 151, the effectivity of the heat dissipation via the heat dissipation body 15 may be increased. The cooling ribs 151 may be aligned in a direction parallel to the moving direction of the clip body 1 or may be aligned in a direction having a certain angle to said moving direction, for example in a perpendicular direction. It was, quite particularly, surprisingly found that the cooling effect can even be enhanced in cases wherein the cooling ribs 151 extend in a direction perpendicular to the moving direction of the clip system 1 during operation. The heat exchange between the cooling ribs 151 and the environment, particularly the environmental air, more particularly the environmental air which is actively blown against the cooling ribs 151 from the outer side of the clip system 1, is excellent, which effect, in turn, results into an improved heat dissipation from the sliding body 5 to the heat dissipation body 15. Thereby, the heat flow from the sliding body 5 to the web fixation body 3 can be prevented.

In a preferred embodiment of the invention, the sliding body 5 and the web fixation body 3 are fixed to each other in a way suppressing a heat flow between them. Such a fixation between the elements can be achieved preferably by bolting, riveting or forming them from one integral part. Hence, there is the above-mentioned fixed operating communication between them, while, on the other hand, a heat flow between both elements can be suppressed. This is of major importance, since the heat generated by the friction between the sliding body 5 and the corresponding contact surfaces of the guide rail can be prevented from encroaching to the web fixation body. Thereby, the risk of a temperature increase at the point of fixation of the film web (i. e. at the contact point between gripper operation element 4, clip table 2 and the film web 20 between them) can be minimized or even abolished, thereby preventing that problems resulting from such a temperature increase may occur, e. g. a tearing of the film web when being grasped by the clip system 1.

In a preferred embodiment, the sliding body 5 and the web fixation body 3 are fixed to each other in a way creating a temperature gradient, the lower temperature being on the side of web fixation body 3. Such a temperature gradient may reliably contribute to avoiding problems occurring as a result of a temperature increase on the side of the web fixation body 3. Such a temperature gradient may be achieved by the physical properties of the materials used for the sliding body 5 and the web fixation body 3 or by the geometrical design of the connection between the sliding body 5 and the web fixation body 3 or by the combination of the physical properties of the materials and the geometrical design of the connection of the sliding body 5 and the web fixation body 3.

In a preferred embodiment of the invention, the connection of the sliding body 5 and the web fixation body 3, for their fixed operating communication, has a geometrical design that prevents a smooth heat flow so that the temperature increase of the web fixation body 3 is minimized. This may be achieved by a small cross section for the heat flow, or by a long way for the heat flow, or by a combination of both.

In a further preferred embodiment of the invention, such a temperature gradient may be achieved by making the sliding body 5 and the web fixation body 3 of materials, e. g. metals, having a different value of the heat conductivity. As a practical example, the heat conductivity of the web fixation body 3 is lower than the heat conductivity of the sliding body 5. Suitable exemplary, but not restricting examples of the respective heat conductivity values are about 350 W/Km for copper, 220 W/Km for aluminum, 170 W/Km for magnesium, 80 to 120 W/Km for brass, 46 to 50 W/Km for steel, 20 W/Km for stainless steel. As a result, the heat generated at the sliding body 5 (by the friction between the sliding elements 52 and the corresponding contact surfaces of the guide rail) and conducted to the metal element 51 of the sliding body 5 cannot be conducted to the web fixation body and, hence, will not proceed to the point of fixation of the film web 20 to the web fixation body 5.

In one even further preferred embodiment of the invention, which is considered to be advantageous, the sliding body 5 and the web fixation body are fixed to each other by means of an intermediate element 31 that has heat barrier properties. The term "heat barrier properties", as used in the present specification and claims, is understood to mean that the material has a low value of heat conductivity or even is a non-conductor for heat. Such an intermediate element 31 can be made of any desired material having such heat barrier or heat non-conductor properties. Suitable examples are usual heat insulators as, for example, ceramics, especially aluminum oxide, silicon dioxide, calcium silicate, IT-sealings like Klingerit, aramid, polyimide (PI), POM, polyamide (PA), epoxy resins, phenolic resins. Particularly preferred are IT-Sealings, POM, polyamide (PA), epoxy resins, phenolic resins as materials having heat barrier properties.

In another preferred embodiment considered to be particularly suitable for the intended purpose of preventing a heat transfer from the sliding body 5 to the web fixation body 3, the sliding body 5 and the web fixation body 3 are fixed to each other by means of an intermediate element 32 having heat dissipation properties. Such an intermediate element 32 may, due to its construction, contribute to a heat dissipation on the route between the two elements 5, 3, rather than a heat transfer between them. Also in this manner, the undesired temperature increase at the point of fixation of the film web 20 to the clip system can be prevented reliably.

The present invention also relates to a transport device for a film web movable along a transport path in a longitudinal direction of a film web stretching device, said transport device comprising:
- two guide rail systems extending substantially longitudinally of the stretching device and substantially parallel to the movable film web on both sides thereof, allowing a continuous high speed movement of a number of clip systems 1 from the start of the transport path of the film web to its end and their return from the end of the transport path to the start;
- transportation means forming two continuous conveyor means movable substantially parallel to the film web on both sides thereof and interposing a number of clip systems 1 inbetween, said transportation means being driven by suitable driving means;
- at least one pair of clip systems 1 according to any of the embodiments of the clip system described in detail above;
- the two clip systems 1, 1 of one pair being arranged substantially opposite to each other at the two sides of the film web; and
- means for feeding a film web to and removing the stretched film web from the stretching device.

As mentioned above, the guide rails of the transport device of the invention serve to guide the clip bodies on a fixed path in the longitudinal direction of a stretching device, substantially parallel to the material web to be subjected to a stretching process. At least one, usually exactly one, guide rail is found on each side of the movable material web or film web The guide rails extend - as also found in the prior art, from which the guide rails are not distinguished - from the beginning of the path of movement of the film web to its end. At the end of the path of movement of the film web, the guide rails turn (and return), in the form of an endless path, to the beginning of the path where their action starts newly.

The guide rails are used as the guidance of movement of the clip systems 1. In other words: The clip systems 1 move on, and along, the guide rails when being moved along the path of the film web and also move on, and along, the guide rails when turning (and returning) from the end of the path to its start. The movement of the clip systems 1 is the movement of the sliding bodies 5 of the respective clip systems 1 on, and along, the guide rails.

On their way along the guide rails, the clip systems are pulled, or pushed forward along their way, by transportation means forming one continuous chain conveyor means on each side of the movable film web. The conveyor means may be any conveyor means known to a skilled person in this technical field, for example a chain, a rope, a belt or any similar means or a combination thereof.

The conveyor means, e. g. the chains, interpose a number of clip systems 1 inbetween, which number may vary in accordance with the requirements as, for example, the speed of movement, the intensity of the stretching action, the material to be stretched, and other parameters. In typical examples, the number of clip systems 1 on each side of the film web may be between 50 and 5000, preferably between 500 and 2500. Usually, the number of clip systems 1 on both sides of the film web is identical; i. e. the clip systems 1 are usually appearing in pairs. In the present transport device of the invention, at least one pair of clip systems 1, 1 of the invention is used; usually, there is a relatively large number of pairs of clip bodies 1, 1 employed, for example 25 to 2500 clip body pairs or 250 to 1250 clip systems pairs.

In the course of their path substantially parallel to and along the movable film web, the clip systems 1 grasp the film web and effect at least one stretching action. There may be several consecutive stretching actions (optionally interrupted by steps where the dimension of the film web is decreased); the preferred action, however, is one stretching action in the course of the movement of the clip systems 1 along with the movable film web.

All above-described embodiments of clip systems 1 may have their advantageous properties, when used in the transport device of the invention.

In a preferred embodiment of the invention, the transport device further comprises means for controlling the temperature at the clip systems 1 against the friction heat generated by the movement of the clip systems 1, 1 on the guide rails. Such a temperature control may be effected by any means a skilled person may know for controlling the temperature. Especially and in accordance with preferred embodiments of the invention, the transport device comprises means for supplying cooling means to the clip systems 1, 1. By supplying one or more than one, usually one, cooling means, an effective heat exchange between the clip systems 1, heat dissipation bodies 15 and the environment may be achieved.

The cooling means which may be supplied are not restricted and may include solid, liquid and gaseous cooling means. Preferred cooling means are gaseous cooling means or liquid cooling means changing their state into a gas at the operating conditions of the transport device, particular preference being given to gases having a large heat capacity. Particularly preferred cooling means are gases like air or nitrogen, also considering their cheap availability in the large amounts needed. Said gases may be cooled to temperatures below ambient temperature before supplied, or they may be used at ambient conditions.

In further preferred embodiments of the transport device, the means for supplying cooling means are means for blowing cooling gas against passing clip systems 1. Hence, at the clip systems 1, when moving along with the film web on the guide rail (where friction occurs and heat is generated by said friction), an undesired heat accumulation at the sliding bodies 5 or an undesired heat transfer to the web fixation bodies 3 can be prevented by a cooling gas flow blown against the clip systems 1. Such cooling gas flow may be an air flow or may be the flow of any other cooling gas or cooling gas mixture conceivable and preferably is a cooling air flow.

The cooling gas flow application means are, in further preferred embodiments, cooling gas nozzles, more preferably cooling air nozzles. Alternatively, or in addition, the means for supplying cooling means are means for maintaining a cooling environment around the transport path run by the clip systems 1, 1, preferably a cooling gas tunnel fed with cooling gas, more preferably a cooling air tunnel fed with cooling air. In said manner, an efficient application of a cooling medium to the clip systems 1 can be established, and the heat generated by friction can be dissipated effectively and without an extended change of the equipment.

The invention also relates to a method for stretching a film web at least in a transverse direction, said method comprising the steps of
- feeding a prepared film web into a stretching device allowing the movement of a film web along a longitudinal path in said device while being stretched;
- allowing at least one pair of clip systems 1, 1 according to the above detailed description, and being adapted to run along said longitudinal path on two guide rails extending substantially longitudinally of the stretching device and substantially parallel to the moving film web on both sides thereof, to grasp said film web at two opposite sides thereof and to move said film along its path while exerting a stretching action on it; and
- removing the stretched film web from the stretching device.

Such a method of the invention allows that the heat generated by friction between the sliding bodies 5 and the corresponding contact surfaces of the guide rails to be dissipated easily and reliably so that no excessive heating of the web fixation body is to be expected. Hence, a smooth operation of the stretching method can be established.

In a preferred embodiment of the invention, the stretching action may be a stretching into one direction (monoaxial stretching, either in a longitudinal direction (machine direction) or in a direction transverse to the machine direction), or may be a stretching into two directions (biaxial stretching, independent from the order of the stretching steps: first longitudinal, then transverse or first transverse, then longitudinal or simultaneously longitudinal and transverse).

In a preferred embodiment of the method of the invention, a further measure is included, i. e. the temperature of the clip systems 1, 1 is controlled against the friction heat generated by the movement of the clip systems 1 on the guide rails. The temperature may be controlled by any means a skilled person may know for controlling the temperature. Especially and in accordance with preferred embodiments of the invention, cooling means are supplied to the clip systems 1, 1. By supplying one or more than one, usually one, cooling means, an effective heat exchange between the clip systems 1, heat dissipation bodies 15 and the environment may be achieved.

The cooling means which may be supplied are not restricted and may include solid, liquid and gaseous cooling means. Preferably, gaseous cooling means or liquid cooling means changing their state into a gas at the operating conditions of the transport device are supplied in the method of the invention, particular preference being given to gases having a large heat capacity. Particularly preferred cooling means used in the method are gases like air or nitrogen, also considering their cheap availability in the large amounts needed. Said gases may be cooled to temperatures below ambient temperature before supplied, or they may be used at ambient conditions.

In further preferred embodiments of the method of the invention, cooling gas is blown against passing clip systems 1. Hence, at the clip systems 1, when moving along with the film web on the guide rail (where friction occurs and heat is generated by said friction), an undesired heat accumulation at the sliding bodies 5 or an undesired heat transfer to the web fixation bodies 3 can be prevented by said cooling gas flow blown against the clip systems 1. Such cooling gas flow may be an air flow or may be the flow of any other cooling gas or cooling gas mixture conceivable and preferably is a cooling air flow.

The cooling gas flow is applied, in further preferred embodiments, by blowing the cooling gas against clip systems 1 passing on their way along the guide rail in the stretching device. Cooling gas nozzles, more preferably cooling air nozzles may be used to direct the cooling gas flow directly to the desired site to be cooled, particularly preferable against the heat dissipation bodies 15 and/or ribs 151. Alternatively, or in addition, the cooling gas may be supplied to means for maintaining a cooling environment around the transport path run by the clip systems 1, preferably to a cooling gas tunnel fed with cooling gas, more preferably a cooling air tunnel fed with cooling air.

In a further preferred embodiment of the invention, the cooling medium, more preferred the cooling gas, even more preferred the cooling air, after having passed the clip systems 1 and preferably the cooling ribs 151 of the heat dissipation body 15, is removed from the environment. This may be performed in a, manner generally known to a skilled person. In a preferred embodiment, the cooling medium or gas is removed by suction nozzles. Suction nozzles may also remove cooling gas in cases where the cooling medium is supplied to a cooling medium tunnel.

In said manner, an efficient application of a cooling medium to the clip systems 1, particularly to their cooling ribs 151, can be established, and the heat generated by friction can be dissipated effectively and without an extended change of the equipment.

The invention was described above in detail while referring to its preferred embodiments. The reference to the preferred embodiments should, however, not be understood as a limitation of the invention. Quite to the contrary: The scope of the invention is only determined by the claims which follow.

## Claims

1. A clip system (1) for grasping a material web (20) movable in a longitudinal direction in a device for at least traverse stretching the material web (20), said clip system (1) comprising
- a sliding body (5) adapted to slide on a guide rail system of a stretching device, said sliding body (5) comprising a metal element (51) and at least one sliding element (52) applied to the metal element (51);
- a driving element adapted to push or pull the sliding body (5) along said guide rail system, said driving element being in fixed operating communication with the sliding body (5);
- a web fixation body (3) adapted to grasp and fix a material web (20), said web fixation body (3) comprising at least one gripper operation element (4), a clip table (2) and a guide rail shielding element (6) and being in fixed operating communication to the sliding body (5); and
- a heat dissipation body (15) made of at least one heat-conducting material and being adjacent to, and in heat-conducting communication with, the sliding body (5) adapted to dissipate heat via its surface to the environment, wherein the sliding body (5) and the heat dissipation body (15) are fixed to each other in a way allowing or promoting a heat flow between them.

2. The clip system (1) according to claim 1, wherein the metal element (51) of the sliding body (5) has the shape of a letter "U", the free space between the arms of the "U" being adapted to engage with a guide rail.

3. The clip system (1) according to claim 1 or claim 2, wherein the sliding element (52) applied to the metal element is made of plastics, preferably is made of a high temperature resistant polymer, more preferably is made of polyimide (PI), polyamide-imide (PAI), PEEK, PEK, PTFE, epoxy resins or phenolic resins or combinations thereof.

4. The clip system (1) according to any of the claims 1 to 3, wherein the sliding body (5) and the heat dissipation body (15) are both made of metals having a high heat conductivity.

5. The clip system (1) according to any of the claims 1 to 4, wherein the heat dissipation body (15) comprises a large contact surface to the surrounding environment, preferably wherein the heat dissipation body (15) comprises a contact surface increased by a factor of at least 2 in comparison to the contact area between the sliding body (5) and the heat dissipation body (15), more preferably wherein the heat dissipation body (15) comprises cooling ribs (151) extending, under operation conditions, towards the upper end of the clip system (1), even more preferred wherein the cooling ribs (151) extend in a direction perpendicular to the moving direction of the clip system (1) during operation.

6. The clip system (1) according to any of claims 1 to 5, wherein the sliding body (5) and the web fixation body (3) are fixed to each other in a way suppressing a heat flow between them, preferably wherein the sliding body (5) and the web fixation body (3) are fixed to each other in a way creating a temperature gradient, the lower temperature being on the side of web fixation body (3), more preferably wherein the sliding body (5) and the web fixation body (3) are made of metals of different heat conductivity, the heat conductivity of the web fixation body (3) being lower than the heat conductivity of the sliding body (5), and/or wherein the sliding body (5) and the web fixation body are integrally fixed to each other by means of an intermediate element (31) having heat barrier properties, and/or wherein the sliding body (5) and the web fixation body (3) are fixed to each other by means of an intermediate element (32) having heat dissipation properties.

7. A transport device for a film web movable along a transport path in a longitudinal direction of a film web stretching device, said transport device comprising:
- two guide rail systems extending substantially longitudinally of the stretching device and substantially parallel to the movable film web on both sides thereof, allowing a continuous high speed movement of a number of clip systems (1) from the start of the transport path of the film web to its end and their return from the end of the transport path to the start;
- transportation means forming two continuous conveyor means movable substantially parallel to the film web on both sides thereof and interposing a number of clip bodies (1) inbetween, said transportation means being driven by suitable driving means;
- at least one pair of clip systems (1) according to any of the claims 1 to 6;
- the two clip systems (1, 1) of one pair being arranged substantially opposite to each other at the two sides of the film web; and
- means for feeding a film web to and removing the stretched film web from the stretching device.

8. The transport device according to claim 7, further comprising means for controlling the temperature at the clip systems (1) against the friction heat generated by the movement of the clip systems (1, 1) on the guide rails, preferably comprising means for supplying cooling means to the clip systems (1, 1).

9. The transport device according to claims 7 and claim 8, wherein the means for supplying cooling means are means for blowing cooling gas against passing clip systems 1, preferably cooling gas nozzles, more preferably cooling air nozzles, and/or wherein the means for supplying cooling means are means for maintaining a cooling environment around the transport path run by the clip systems (1, 1), preferably a cooling gas tunnel fed with cooling gas, more preferably a cooling air tunnel fed with cooling air.

10. A method for stretching a film web at least in the transverse direction, said method comprising the steps of
- feeding a prepared film web into a stretching device allowing the movement of a film web along a longitudinal path in said device while being stretched;
- allowing at least one pair of clip systems (1, 1) according to any of claims 1 to 6, and being adapted to run along said longitudinal path on two guide rails extending substantially longitudinally of the stretching device and substantially parallel to the moving film web on both sides thereof, to grasp said film web at two opposite sides thereof and to move said film along its path while exerting a stretching action on it; and
- removing the stretched film web from the stretching device.

11. The method according to claim 10, wherein further the temperature of the clip systems (1, 1) is controlled against the friction heat generated by the movement of the clip systems (1, 1) on the guide rails, preferably wherein cooling means are supplied to the clip systems (1, 1).

12. The method according to claim 10 or claim 11, wherein cooling gas is blown against passing clip systems (1, 1) in the stretching device, preferably wherein cooling air is blown against passing clip systems (1, 1) in the stretching device, and/or wherein a cooling environment is maintained around the transport path run by the clip systems (1), preferably wherein a cooling gas tunnel is fed with cooling gas, more preferably is fed with cooling air.

13. The method according to any of claims 10 to 12, wherein the cooling medium is removed from the cooling environment, preferably is removed by means of suction nozzles.

## Patentansprüche

1. Kluppen-System (1) zum Greifen eines in eine Längsrichtung bewegbaren Bahn-Materials (20) in einer Vorrichtung für ein Recken des Bahn-Materials (20) wenigstens in Querrichtung, wobei das Kluppen-System (1) umfaßt:
- einen Gleit-Körper (5), der dafür angepasst ist, auf einem Führungsschienen-System einer Reckvorrichtung zu gleiten, wobei der Gleit-Körper (5) ein Metall-Element (51) und wenigstens ein Gleit-Element (52), das auf das Metall-Element (51) aufgebracht ist, umfaßt;
- ein Antriebs-Element, das dafür angepasst ist, den Gleit-Körper (5) entlang dem Führungsschienen-System zu schieben oder zu ziehen, wobei das Antriebs-Element in fixierter Betriebs-Verbindung mit dem Gleit-Körper (5) steht;
- einen Bahn-Fixierungs-Körper (3), der dafür angepasst ist, ein Bahn-Material (20) zu greifen und zu fixieren, wobei der Bahn-Fixierungs-Körper (3) wenigstens ein Greifer-Betriebs-Element (4), einen Kluppen-Tisch (2) und ein Führungsschienen-Abschirm-Element (6) umfaßt und in fixierter Betriebs-Verbindung mit dem Gleit-Körper (5) steht; und
- einen Hitze-Dissipations-Körper (15), der hergestellt ist aus wenigstens einem hitzeleitenden Material und der benachbart dem Gleit-Körper (5) und in Hitze leitender Verbindung mit diesem steht und dafür angepasst ist, Hitze über seine Oberfläche an die Umgebung abzuleiten, wobei der Gleit-Körper (5) und der Hitze-Dissipations-Körper (15) aneinander in einer Weise fixiert sind, die einen Wärmefluß zwischen ihnen erlaubt oder fördert.

2. Kluppen-System (1) nach Anspruch 1, wobei das Metall-Element (51) des Gleit-Körpers (5) die Form des Buchstabens "U" hat, wobei der freie Raum zwischen den Armen des "U" dafür angepasst ist, in Eingriff mit einer Führungsschiene zu kommen.

3. Kluppen-System (1) nach Anspruch 1 oder Anspruch 2, wobei das Gleit-Element (52), das auf das Metall-Element aufgebracht ist, hergestellt ist aus Kunststoff, vorzugsweise hergestellt ist aus einem hochtemperaturbeständigen Polymer, weiter bevorzugt hergestellt ist aus Polyimid (PI), Polyamid-Imid (PAI), PEEK, PEK, PTFE, Epoxy-Harzen oder phenolischen Harzen oder Kombinationen daraus.

4. Kluppen-System (1) nach irgendeinem der Ansprüche 1 bis 3, wobei der Gleit-Körper (5) und der Hitze-Dissipations-Körper (15) beide aus Metallen hergestellt sind, die eine hohe Wärmeleitfähigkeit aufweisen.

5. Kluppen-System (1) nach irgendeinem der Ansprüche 1 bis 4, wobei der Hitze-Dissipations-Körper (15) eine große Kontaktfläche mit der um ihn herum befindlichen Umgebung umfaßt, vorzugsweise wobei der Hitze-Dissipations-Körper (15) eine Kontaktfläche umfaßt, die um einen Faktor von wenigstens 2 im Vergleich zu der Kontaktfläche zwischen dem Gleit-Körper (5) und dem Hitze-Dissipations-Körper (15) erhöht ist, noch mehr bevorzugt wobei der Hitze-Dissipations-Körper (15) Kühlrippen (151) umfaßt, die sich - unter Betriebs-Bedingungen - in Richtung auf das obere Ende des Kluppen-Systems (1) erstrecken, noch mehr bevorzugt wobei sich die Kühlrippen (151) bei Betrieb in einer Richtung senkrecht zur Bewegungsrichtung des Kluppen-Systems (1) erstrecken.

6. Kluppen-System (1) nach irgendeinem der Ansprüche 1 bis 5, wobei der Gleit-Körper (5) und der Bahn-Fixierungs-Körper (3) aneinander in einer Weise fixiert sind, die einen Wärmefluß zwischen ihnen unterdrückt, vorzugsweise wobei der Gleit-Körper (5) und der Bahn-Fixierungs-Körper (3) aneinander in einer Weise fixiert sind, die einen Temperatur-Gradienten schafft, wobei die niedrigere Temperatur auf der Seite des Bahn-Fixierungs-Körpers (3) anliegt, weiter bevorzugt wobei der Gleit-Körper (5) und der Bahn-Fixierungs-Körper (3) aus Metallen mit unterschiedlichen Wärmeleitfähigkeiten hergestellt sind, wobei die Wärmeleitfähigkeit des Bahn-Fixierungs-Körpers (3) geringer ist als die Wärmeleitfähigkeit des Gleit-Körpers (5), und/oder wobei der Gleit-Körper (5) und der Bahn-Fixierungs-Körper integral aneinander befestigt sind mittels eines Zwischen-Elements (31), das Wärmesperre-Eigenschaften hat, und/oder wobei der Gleit-Körper (5) und der Bahn-Fixierungs-Körper (3) aneinander mittels eines Zwischen-Elements (32) fixiert sind, das Wärmedissipations-Eigenschaften hat.

7. Transport-Vorrichtung für eine entlang einem Transport-Weg in Längsrichtung einer Folien-Reck-Vorrichtung bewegbare Folienbahn, wobei die Transport-Vorrichtung umfaßt:
- zwei Führungsschienen-Systeme, die sich im Wesentlichen in Längsrichtung der Reck-Vorrichtung und im Wesentlichen parallel zu der bewegbaren Folienbahn auf deren beiden Seiten erstrecken und ein kontinuierliches Bewegen einer Anzahl von Kluppen-Systemen (1) mit hoher Geschwindigkeit vom Start des Transportweges der Folienbahn zu ihrem Ende und deren Rückkehr vom Ende des Transportweges zum Start erlauben;
- Transport-Einrichtungen, die zwei kontinuierliche Förder-Einrichtungen bilden, die im Wesentlichen parallel zu der Folienbahn auf deren beiden Seiten bewegbar sind und eine Anzahl von Kluppen-Körpern (1) dazwischen anordnen, wobei die Transport-Einrichtungen durch geeignete Antriebs-Einrichtungen angetrieben werden;
- wenigstens ein Paar Kluppen-Systeme (1) nach irgendeinem der Ansprüche 1 bis 6;
- wobei die beiden Kluppen-Systeme (1, 1) eines Paars im Wesentlichen einander gegenüber an den beiden Seiten der Folienbahn angeordnet sind; und
- Einrichtungen zum Zuführen einer Folienbahn zu der Reck-Vorrichtung und zum Entfernen der gereckten Folienbahn von der Reck-Vorrichtung.

8. Transport-Vorrichtung nach Anspruch 7, umfassend weiter Einrichtungen zum Steuern der Temperatur an den Kluppen-Systemen (1) gegen die Reibungswärme, die beim Bewegen der Kluppen-Systeme (1, 1) an den Führungsschienen erzeugt wird, vorzugsweise umfassend Einrichtungen zum Zuleiten von Kühlmitteln zu den Kluppen-Systemen (1, 1).

9. Transport-Vorrichtung nach Anspruch 7 und Anspruch 8, wobei die Einrichtungen zum Zuführen von Kühlmittel Einrichtungen zum Blasen eines kühlenden Gases gegen die vorbeilaufenden Kluppen-Systeme (1) sind, vorzugsweise Kühlgas-Düsen, weiter bevorzugt Kühlluft-Düsen, und/oder wobei die Einrichtungen zum Zuführen von Kühlmittel Einrichtungen zum Aufrechterhalten einer kühlenden Umgebung um den Transportweg sind, der von den Kluppen-Systemen (1, 1) befahren wird, vorzugsweise ein Kühlgas-Tunnel, der mit einem kühlenden Gas gespeist wird, noch mehr bevorzugt ein Kühlluft-Tunnel, der mit kühlender Luft gespeist wird.

10. Verfahren zum Recken einer Folienbahn wenigstens in Querrichtung, wobei das Verfahren die folgenden Schritte umfaßt:
- Zuführen einer vorbereiteten Folienbahn in eine Reck-Vorrichtung, die das Bewegen einer Folienbahn entlang eines in Längsrichtung verlaufenden Weges in der Vorrichtung erlaubt, wobei die Bahn gereckt wird;
- Ermöglichen, dass wenigstens ein Paar Kluppen-Systeme (1, 1) gemäß irgendeinem der Ansprüche 1 bis 6 und darüber hinaus angepasst dafür, entlang des in Längsrichtung verlaufenden Weges auf zwei Führungsschienen zu laufen, die sich im Wesentlichen in Längsrichtung der Reckvorrichtung und im Wesentlichen parallel zu der sich bewegenden Folienbahn auf deren beiden Seiten erstrecken, die Folienbahn auf zwei einander gegenüberliegenden Seiten ergreift und die Folie entlang ihres Weges bewegt, wobei sie eine reckende Wirkung auf diese ausübt; und
- Entfernen der gereckten Folienbahn von der Reck-Vorrichtung.

11. Verfahren nach Anspruch 10, wobei weiter die Temperatur der Kluppen-Systeme (1, 1) gesteuert wird gegen die Reibungswärme, die durch das Bewegen der Kluppen-Systeme (1, 1) auf den Führungsschienen erzeugt wird, vorzugsweise wobei Kühlmittel den Kluppen-Systemen (1, 1) zugeführt werden.

12. Verfahren nach Anspruch 10 oder Anspruch 11, wobei Kühlgas gegen vorbeilaufende Kluppen-Systeme (1, 1) in der Reckvorrichtung geblasen wird, vorzugsweise wobei Kühlluft gegen vorbeilaufende Kluppen-Systeme (1, 1) in der Reckvorrichtung geblasen wird, und/oder wobei eine kühlende Umgebung um den Transportweg aufrechterhalten wird, der von den Kluppen-Systemen (1) befahren wird, vorzugsweise worin ein Kühlgas-Tunnel mit kühlendem Gas beschickt wird, noch mehr bevorzugt mit kühlender Luft beschickt wird.

13. Verfahren nach irgendeinem der Ansprüche 10 bis 12, wobei das kühlende Medium von der kühlenden Umgebung entfernt wird, vorzugsweise mittels Saugdüsen entfernt wird.

## Revendications

1. Système de pince (1) pour la préhension d'une bande de matériau (20) mobile dans un sens longitudinal dans un dispositif pour un étirage au moins transversal de la bande de matériau (20), ledit système de pince (1) comprenant
- un corps coulissant (5) adapté à coulisser sur un système de rail de guidage d'un dispositif d'étirage, ledit corps coulissant (5) comprenant un élément métallique (51) et au moins un élément coulissant (52) appliqué à l'élément métallique (51) ;
- un élément d'entraînement adapté à pousser ou tirer le corps coulissant (5) le long dudit système de rail de guidage, ledit élément d'entraînement étant en communication opérationnelle fixe avec le corps coulissant (5) ;
- un corps de fixation de bande (3) adapté à une préhension et une fixation d'une bande de matériau (20), ledit corps de fixation de bande (3) comprenant au moins un élément opérationnel de préhension (4), une table de pince (2) et un élément de protection (6) de rail de guidage et étant en communication opérationnelle fixe avec le corps coulissant (5) ; et
- un corps de dissipation de chaleur (15) constitué d'au moins un matériau conducteur de la chaleur et étant adjacent au, et en communication de conduction de chaleur avec le, corps coulissant (5) adapté à dissiper la chaleur par l'intermédiaire de sa surface jusque dans l'environnement, dans lequel le corps coulissant (5) et le corps de dissipation de chaleur (15) sont fixés l'un à l'autre d'une manière permettant ou favorisant un flux de chaleur entre eux.

2. Système de pince (1) selon la revendication 1, dans lequel l'élément métallique (51) du corps coulissant (5) a la forme d'une lettre « U », l'espace libre entre les jambages du « U » étant adapté à s'engager avec un rail de guidage.

3. Système de pince (1) selon la revendication 1 ou la revendication 2, dans lequel l'élément coulissant (52) appliqué à l'élément métallique est constitué de plastique, est préférablement constitué d'un polymère résistant aux températures élevées, est plus préférablement constitué de polyimide (PI), de polyamide-imide (PAI), de PEEK, de PEK, de PTFE, de résines époxyde ou de résines phénoliques ou de combinaisons de ceux-ci.

4. Système de pince (1) selon l'une quelconque des revendications 1 à 3, dans lequel le corps coulissant (5) et le corps de dissipation de chaleur (15) sont tous les deux constitués de métaux ayant une conductivité élevée de la chaleur.

5. Système de pince (1) selon l'une quelconque des revendications 1 à 4, dans lequel le corps de dissipation de chaleur (15) comprend une grande surface de contact avec l'environnement l'entourant, préférablement dans lequel le corps de dissipation de chaleur (15) comprend une surface de contact accrue d'un facteur d'au moins 2 par comparaison avec la zone de contact entre le corps coulissant (5) et le corps de dissipation de chaleur (15), plus préférablement dans lequel le corps de dissipation de chaleur (15) comprend des ailettes de refroidissement (151) s'étendant, sous des conditions opérationnelles, vers l'extrémité supérieure du système de pince (1), de façon encore plus préférée dans lequel les ailettes de refroidissement (151) s'étendent dans un sens perpendiculaire au sens de déplacement du système de pince (1) pendant le fonctionnement.

6. Système de pince (1) selon l'une quelconque des revendications 1 à 5, dans lequel le corps coulissant (5) et le corps de fixation de bande (3) sont fixés l'un à l'autre d'une manière qui supprime un flux de chaleur entre eux, préférablement dans lequel le corps coulissant (5) et le corps de fixation de bande (3) sont fixés l'un à l'autre d'une manière créant un gradient de température, la température plus basse étant sur le côté du corps de fixation de bande (3), plus préférablement dans lequel le corps coulissant (5) et le corps de fixation de bande (3) sont constitués de métaux de conductivité différente de la chaleur, la conductivité de la chaleur du corps de fixation de bande (3) étant plus basse que la conductivité de la chaleur du corps coulissant (5), et/ou dans lequel le corps coulissant (5) et le corps de fixation de bande sont fixés l'un à l'autre de façon intégrale au moyen d'un élément intermédiaire (31) ayant des propriétés de barrière à la chaleur, et/ou dans lequel le corps coulissant (5) et le corps de fixation de bande (3) sont fixés l'un à l'autre au moyen d'un élément intermédiaire (32) ayant des propriétés de dissipation de la chaleur.

7. Dispositif de transport pour une bande de film mobile le long d'un chemin de transport dans un sens longitudinal d'un dispositif d'étirage de bande de film, ledit dispositif de transport comprenant :
- deux systèmes de rail de guidage s'étendant sensiblement longitudinalement par rapport au dispositif d'étirage et sensiblement parallèlement à la bande de film mobile sur les deux côtés de celle-ci, permettant un déplacement continu à grande vitesse d'un certain nombre de systèmes de pince (1) du début du chemin de transport de la bande de film jusqu'à son extrémité et leur retour de l'extrémité du chemin de transport jusqu'au début ;
- un moyen de transport formant deux moyens continus de convoyeur mobiles sensiblement parallèlement à la bande de film sur les deux côtés de celle-ci et interposant un certain nombre de corps de pince (1) entre ceux-ci, ledit moyen de transport étant entraîné par un moyen d'entraînement approprié ;
- au moins une paire de systèmes de pince (1) selon l'une quelconque des revendications 1 à 6 ;
- les deux systèmes de pince (1, 1) d'une paire étant agencés de façon sensiblement opposés l'un par rapport à l'autre au niveau des deux côtés de la bande de film ; et
- un moyen pour alimenter une bande de film sur le dispositif d'étirage, et enlever la bande de film étirée de celui-ci.

8. Système de transport selon la revendication 7, comprenant en outre un moyen pour maîtriser la température au niveau des systèmes de pince (1) contre la chaleur de frottement générée par le mouvement des systèmes de pince (1, 1) sur les rails de guidage, comprenant préférablement un moyen pour amener un moyen de refroidissement jusqu'aux systèmes de pince (1, 1).

9. Système de transport selon la revendication 7 et la revendication 8, dans lequel le moyen pour amener un moyen de refroidissement est un moyen pour souffler un gaz de refroidissement contre les systèmes de pince 1 passant, préférablement des buses de gaz de refroidissement, plus préférablement des buses d'air de refroidissement, et/ou dans lequel le moyen pour amener un moyen de refroidissement est un moyen pour maintenir un environnement de refroidissement autour du chemin de transport parcouru par les systèmes de pince (1, 1), préférablement un tunnel de gaz de refroidissement alimenté avec un gaz de refroidissement, plus préférablement un tunnel d'air de refroidissement alimenté avec un air de refroidissement.

10. Procédé d'étirage d'une bande de film au moins dans le sens transversal, ledit procédé comprenant les étapes de
- alimentation d'une bande de film préparée dans un dispositif d'étirage permettant le mouvement d'une bande de film le long d'un chemin longitudinal dans ledit dispositif tout en étant étirée ;
- préhension, par au moins une paire de systèmes de pince (1, 1) selon l'une quelconque des revendications 1 à 6, et étant adaptés à se déplacer le long dudit chemin longitudinal sur deux rails de guidage s'étendant sensiblement longitudinalement par rapport au dispositif d'étirage et sensiblement parallèlement à la bande de film mobile sur les deux côtés de celle-ci, de ladite bande de film au niveau de deux côtés opposés de celle-ci et déplacement dudit film le long de son chemin tout en exerçant une action d'étirage sur celui-ci ; et
- enlèvement de la bande de film étirée du dispositif d'étirage.

11. Procédé selon la revendication 10, dans lequel, en outre, la température des systèmes de pince (1, 1) est maîtrisée contre la chaleur de frottement générée par le mouvement des systèmes de pince (1, 1) sur les rails de guidage, préférablement dans lequel un moyen de refroidissement est amené jusqu'aux systèmes de pince (1, 1).

12. Procédé selon la revendication 10 ou la revendication 11, dans lequel un gaz de refroidissement est soufflé contre les systèmes de pince (1, 1) passant dans le dispositif d'étirage, préférablement dans lequel un air de refroidissement est soufflé contre les systèmes de pince (1, 1) passant dans le dispositif d'étirage, et/ou dans lequel un environnement de refroidissement est maintenu autour du chemin de transport parcouru par les systèmes de pince (1), préférablement dans lequel un tunnel de gaz de refroidissement est alimenté avec un gaz de refroidissement, plus préférablement est alimenté avec un air de refroidissement.

13. Procédé selon l'une quelconque des revendications 10 à 12, dans lequel le milieu de refroidissement est enlevé de l'environnement de refroidissement, préférablement est enlevé au moyen de buses d'aspiration.
